# EUROPÄISCHE PATENTSCHRIFT

(11) **EP 1 129 840 B1**
(45) Veröffentlichungstag und Bekanntmachung des Hinweises auf die Patenterteilung: **16.10.2013**
(21) Anmeldenummer: 01104450.0
(22) Anmeldetag: 28.02.2001
(51) Int. Cl.: B29C 70/58, B29C 70/50, B27N 3/28, C08L 97/02

(54) **Verfahren zur Herstellung eines mattenförmiges Vorprodukts**
Method for the fabrication of a mat-like precursor
Procédé pour la fabrication d'un précurseur en forme de natte

(30) Priorität: 03.03.2000 DE 10010414
(43) Veröffentlichungstag der Anmeldung: 05.09.2001
(73) Patentinhaber: Trespa International B.V., 6002 SM Weert (NL)
(72) Erfinder: Willemse, Remco Cornelis, 6004 DA Weert (NL)
(74) Vertreter: Dohmen, Johannes Maria Gerardus

(56) Entgegenhaltungen:
- WO-A-00/71620
- WO-A-98/50207
- US-A- 5 116 670
- US-A- 5 476 617

## Beschreibung

Die Erfindung betrifft ein Verfahren zur kontinuierlichen Herstellung eines mattenförmigen Vorprodukts für Platten aus einer Mischung, die aus Fasern und/oder Pellets aus Zellulose bzw. Holz und zumindest einem wärmehärtbaren Harz besteht sowie Vorprodukt und Verwendung des Vorprodukts.

WO 00/71620 betrifft Holzfaser-Halbteile bestehend im wesentlichen aus gepressten Holzfasern, die mit hitzegehärteten Kondensationsharzen umgeben sind. Der beleimungsgrad der Holzfasern beträgt dabei 30 bis 60% Festharz in Form von Kondensationsharzgemischen oder Mischkondensationsharzen (Copolymerisaten) bezogen auf 100% atro-Fasern, wobei der Festharzanteil an Melamin-Formadehydharz als Kondensationsharz maximal 45% bezogen auf atro-Holz und der Festharzanteil an Phenol-Formaldehydharz als weiteres Kondensationsharz kleiner als 15% bezogen auf atro-Holz beträgt.

Aus der US-A 5 082 605 ist ein Verfahren zur Herstellung eines Verbundmaterials bekannt, das eine diskontinuierliche Phase von Zellulosefasern enthält, die in einer kontinuierlichen Phase einer Polymerkomponente eingebunden und eingekapselt sind, wobei die Polymerkomponente zum größten Teil aus Polyethylen besteht. Die Zellulosefasern, die ein Verhältnis von Länge zu Durchmesser von 2 bis 12 haben, und die Polymerkomponente werden miteinander gemischt, wob ei die Temperatur der Mischung bis zum Einkapselungspunkt erhöhtwird. Das eingekapselte Material wird innerhalb des Einkapselungsbereiches gehalten, während die Partikelgröße verringert wird. Danach wird das Material extrudiert, während seine Temperatur innerhalb des Einkapselungsbereiches geregelt wird. Die Fasern werden im wesentlichen in Flußrichtung ausgerichtet bis das Material in eine beheizte Düse gelangt. Zellulosefasern und das Polymermaterial werden in einem Verhältnis ungefähr 40 Gew.-% Polymer und 60 Gew.-% Fasern bis 60 Gew.-% Polymer und 40 Gew.-% Fasern so lange gemischt, bis die Oberflächentemperatur der Mischung zwischen 143 ° bis 177 °C und auch noch höher liegt. Dabei ist die Oberflächentemperatur abhängig von dem verwendeten Polymermaterial. Die Mischung wird danach in Teilmengen unterteilt, die eine maximale Abmessung von ungefähr 3,8 cm haben. Diese Teilmengen werden nachfolgend extrudiert, wobei die Temperatur innerhalb des Einkapselungstemperaturbereich gehalten wird. Während der Extrusion werden die eingekapselten Fasern im wesentlichen in Flußrichtung ausgerichtet. Das Polymer ist zum größten Teile ein Polyethylen niedriger Dichte, während ein kleinerer Teil ein Polyethylen hoher Dichte sein kann. Ein kleinerer Teil des Polymers kann auch Polypropylen sein. Aus dem Verbundmaterial werden beispielsweise Dachschindeln, Bodenfliesen, Paneele, Tür- und Fensterbretter und -rahmen gefertigt sowie Haus- und Gartenartikel.

In der US-A 4 228 116 sind umformbare Platten beschrieben, die durch die kontinuiuerliche Plastifizierung und Extrusion einer zumindest teilweise aggregierten Mischung aus 40 bis 60 Gew.-% eines thermoplastischen Harzes, das bevorzugt Polypropylen ist und 40 bis 60 Gew.-% eines organischen, insbesondere zellulosischen Füllmaterials wie beispielsweise Holzpartikeln hergestellt werden. Das extrudierte Material wird vor dem Aushärten zu einem Band ausgerollt. Dieses extrudierte und ausgerollte Band wird in Platten geschnitten, aus denen beispielsweise geformte Artikel wie Armaturen-, Instrumentenbretter oder sonstige Komponenten für Fahrzeuge, Möbel oder Teile hierfür und dergleichen gefertigt werden, indem bei erhöhter Temperatur die Platten gepreßt oder durch andere Umformmethoden, wie sie im Stand der Technik für die Verarbeitung thermoplastischer Materialien bekannt sind, bearbeitet werden. Alternativ können die Platten für solche Zwecke verwendet werden, bei denen Holzplatten oder Sperrholz normalerweise eingesetzt werden.

Aus der WO 98/50207 ist ein Verfahren zur Herstellung eines dekorativen Laminats bekannt umfassend einen Kern, eine primäre Oberflächenschicht und eine sekundäre Oberflächenschicht, wobei für den Kern 85 Gewichtsteile von organischen Partikeln werden gemischt mit 15-85 Gewichtsteile einem duroplastischen Harz eines Pulvers.

Aus der WO 91/19754 ist eine mit Kunststoff imprägnierte Matte bekannt, die aus einem lösungsmittelfreien Kunststoff auf Basis eines Epoxidharzes, eines Phenolnovolaks als Härter und gegebenenfalls einem Beschleuniger besteht. Der Anteil an flüchtigen Stoffen beträgt weniger als 0,5 Gew.-%. Zur Herstellung dieser Matte wird ein lösungsmittelfreies Epoxidharz-Phenolnovolak-Gemisch auf eine Temperatur von 60 bis 140 °C erwärmt, bei der das Harzgemisch eine Viskosität von 5 bis 50 Pa·s aufweist. Das vorerwärmte Epoxidharz-Phenolnovolak-Gemisch durchdringt in einem Kalander eine bahnförmige Fasermatte kontinuierlich. Die nach diesem Verfahren hergestellte Matte besitzt eine gute Lagerfähigkeit und eignet sich zur Herstellung von heißverpreßten und ausgehärteten Kunststoffteilen, die eine hohe Chemikalien- und Temperaturbeständigkeit aufweisen. Bei der Fasermatte handelt es sich beispielsweise um eine Glasfasermatte.

Aufgabe der Erfindung ist es, ein Verfahren zu schaffen, mit dem Vorprodukte mit bis zu 90 Gew.-% organischem Faseranteil nach herkömmlichen Methoden extrudiert werden können, ohne daß es zu einer Zersetzung der Mischung kommt. Im Rahmen dieser Aufgabe sollen auch lagerfähige Vorprodukte geschaffen werden, aus denen ausgehärtete Platten und Plattenteile geformt werden können, die eine weitgehend glatte oder gegebenenfalls eine leicht strukturierte Oberfläche besitzen.

Diese Aufgabe wird verfahrensgemäß gelöst durch das Verfahren gemäß Anspruch 1 umfassend die Verfahrensschritte :
(a) Mischen von 50 bis 90 Gew.-% Fasern und/oder Pellets mit 10 bis 50 Gew.-% wärmehärtbarem Harz, wobei die Gewichtsprozente jeweils auf das Gesamtgewicht der Mischung bezogen sind,
(b) Kneten und Homogenisierung der Mischung aus Fasern und/oder Pellets, wobei die Pellets zu Fasern zerfallen, und zumindest einem wärmehärtbaren Harz und Weiterleiten der Mischung an einen Extruder,
(c) Erwärmen der Mischung im Extruder auf eine Temperatur am Extruderausgang, bei der die Härtung des Harzes einsetzt,
(d) Extrudieren der nicht durchgehärteten Mischung als homogene Masseund Verteilung der homogenen Masse in einer Kalanderstrecke,
(e) Druckausübung auf die homogene Masse in der Kalanderstrecke in einem solchen Umfang, daß ein mattenförmiges Vorprodukt erhalten wird, und
(f) Abtransport und Stabilisierung der gewünschten Form des Vorprodukts.

In einer weiteren Verfahrensweise wird die Aufgabe gelöst durch das Verfahren gemäß Anspruch 2, umfassend die Verfahrensschritte :
(a') Mischen und Kneten von 50 bis 90 Gew.-% Fasern und/oder Pellets mit 10 bis 50 Gew.-% wärmehärtbarem Harz in einem Extruder, wobei die Pellets zu Fasern zerfallen,
(b') unterschiedlich starkes Erwärmen der Mischung aus Fasern und zumindest einem wärmehärtbaren Harz im Extruder,
(c) Erwärmen der Mischung im Extruder auf eine Temperatur am Extruderausgang, bei der die Härtung des Harzes einsetzt,
(d) Extrudieren der nicht durchgehärteten Mischung als homogene Masse und Verteilung der homogenen Masse in einer Kalanderstrecke,
(e) Druckausübung auf die homogene Masse in der Kalanderstrecke in einem solchen Umfang, daß ein mattenförmiges Vorprodukt erhalten wird, und
(f) Abtransport und Stabilisierung der gewünschten Form des Vorprodukts.

Die bei dem Verfahren verwendeten Fasern sind Holzfasern, die eine Feuchtigkeit im Bereich von 2 bis 50 Gew.-%, insbesondere von 10 bis 20 Gew.-% besitzen. Zweckmäßigerweise wird die Mischung in einem Mischer geknetet und danach einem Extruder zugeleitet, von dem die Mischung frei von Rückdruck auf die Extruderschnecke extrudiert wird. Als wärmehärtbare Harze werden bei dem Verfahren Harze mit unterschiedlichen Kondensationsgraden, unterschiedliche Typen oder Mischungen von zwei oder mehreren solcher Harze eingesetzt. Von Vorteil ist es, die Harze getrennt von den Fasern und/oder Pellets dem Mischer zuzuführen. Der Extruder enthält Zonen mit unterschiedlichen Temperaturen, wobei die Temperatur so geregelt wird, daß die Temperatur der Mischung am Extruderausgang höchstens 120 °C beträgt. Bei dieser Temperatur startet die Härtung des Harzes, jedoch reicht diese Temperatur nicht aus, um das Harz bzw. die Mischung aus Harz und Fasern voll durchzuhärten. In Ausgestaltung des Verfahrens sind die wärmehärtbaren Harze aus der Gruppe Phenol-, Melamin-, Epoxidharze ausgewählt.

Die weitere Ausgestaltung ergibt sich aus den Merkmalen der Ansprüche 9 bis 19.

Das Vorprodukt für heißverpreßte und ausgehärtete Plattenteile oder Platten aus einem Verbundmaterial aus Fasern und zumindest einem wärmehärtbaren Harz zeichnet sich dadurch aus, daß das Verbundmaterial aus 50 bis 90 Gew.-% Fasern und 10 bis 50 Gew.-% zumindest einem wärmehärtbaren Harz besteht, wobei die Gewichtsprozente auf das Gesamtgewicht des Verbundmaterials bezogen sind und daß das Harz des Vorprodukts nicht durchgehärtet ist. Das Vorprodukt wird als Ausgangsmaterial von heißverpreßten und ausgehärteten Plattenteilen oder Platten verwendet, indem es in einer oder mehreren Lagen in eine Preßform eingesetzt und unter Heißpreßung ausgehärtet wird.

Die Erfindung wird im folgenden anhand der Zeichnungen näher erläutert:

Es zeigen:
- Fig. 1: ein Flußdiagramm der einzelnen Schritte in einer ersten Ausführungsweise des erfindungsgemäßen Verfahrens,
- Fig. 2: ein Flußdiagramm der einzelnen Schritte in einer zweiten Ausführungsweise des erfindungsgemäßen Verfahrens,
- Fig. 3: eine schematische Darstellung von Einrichtungen zur Durchführung der zweiten Ausführungsweise des erfindungsgemäßen Verfahrens, wie es in Fig. 2 gezeigt ist, und
- Fig. 4: weitere Einrichtungen zur Durchführung des Verfahrens, wie es in Fig. 2 schematisch dargestellt ist.

In den Verfahren nach der Erfindung werden als einer der wesentlichen Bestandteile Holzpartikel wie Holzfasern, Pellets, Holzspäne und/oder Holzmehl eingesetzt. Je kleiner die Holzpartikel in ihren Längen- und in ihren Durchmesserabmessungen sind, desto glatter sind die Oberflächen der daraus hergestellten Vorprodukte für Platten und Plattenteile, und desto größer sind die zu erzielenden Dichten dieser Vorprodukte. Die für den Einsatz bei den Verfahren verwendeten Holzpartikel haben im allgemeinen einen Durchmesser oder eine Breite von gleich/kleiner 3 mm und eine Länge von gleich/kleiner 6 mm bis zu gleich/kleiner 60 mm, so daß das Verhältnis von LängeBreite im Bereich von 2 bis 20 liegt. Wenn die Holzspäne ein Verhältnis von Länge zu Breite bis zu 20 haben, weisen die damit hergestellten Vorprodukte sehr glatte Oberflächen auf. Werden bei gleichbleibender Länge der Holzpartikel deren Breiten kleiner oder bleiben die Breiten bei ansteigender Länge der Holzpartikel unverändert, wobei sich das Verhältnis von Länge zu Breite im Bereich von 21 bis 40 bewegen kann, so ist die Oberfläche der daraus hergestellten Vorprodukte nicht so glatt wie die Oberfläche der Vorprodukte, die dickere bzw. kürzere Holzpartikel enthalten. Für bestimmte Arten von Platten, bei denen eine rauhe Oberflächenstruktur erwünscht ist, können Vorprodukte verwendet werden, die aus langgestreckten Holzpartikeln bzw. Holzfasern gefertigt sind.

Unter Fasern sind weiterhin Zellulose- und/oder Holzfasern zu verstehen, ebenso umfassen die Pellets sowohl Holz- als auch Zellulosepellets. Pellets werden vor allem dann eingesetzt, wenn die Schüttdichte der Mischung so groß sein soll, daß sie mit losen Fasern nicht erreicht werden kann.

Die Fasern werden im allgemeinen vorab getrocknet, so daß sie einen Feuchtigkeitsgehalt von 2 bis 50 Gew.-%, insbesondere 10 bis 20 Gew.-% besitzen. Selbstverständlich können die Fasern ebenso wie die Harze vor dem Extrudieren auch auf einen Feuchtigkeitsgehalt von kleiner 10 Gew.-% insbesondere 5 bis 2 Gew.-% getrocknet werden, falls billige Energie für die Trocknung zur Verfügung steht. Zu hohe Feuchtigkeit der Fasern beeinflußt negativ die Bindung mit dem zweiten wesentlichen Bestandteil des Verfahrens, nämlich einem wärmehärtbaren Harz oder einer Mischung aus zumindest zwei wärmehärtbaren Harzen. Durch zu hohe Feuchtigkeit erhöht sich die Verarbeitungszeit und der Energieaufwand, der erforderlich ist, um die Feuchtigkeit der Fasern zu verringern. Die Vorabtrocknung der Fasern ist bei ursprünglich nicht zu hohen Feuchtigkeitsgraden bis zu etwa 20 Gew.-% nicht erforderlich, da infolge der Wärmeerzeugung im Extruder und der großen Oberflächen der mehr oder weniger einzeln den Extruder verlassenden Fasern, ein hoher Wasseranteil verdunstet, so daß der Feuchtigkeitsanteil der Vorprodukte kleiner 10 Gew.-% und in den meisten Fällen sogar kleiner als 7 Gew.-% ist. Dies ist erforderlich, um das Auftreten von Blasen und Kratern im Vorprodukt zu vermeiden. Das oder die wärmehärtbaren Harze werden aus der Gruppe Phenol-, Melamin-, Epoxidharze ausgewählt, wobei das oder die Harze eine Viskosität von mindestens 0,05 Pa·s besitzen. Der Bereich der Viskosität der Harze kann sich von 0,05 bis 100 Pa·s erstrecken. Die Harze sind nach Möglichkeit wasser- und/oder lösungsmittelfrei. Falls die Harze Wasser oder ein Lösungsmittel enthalten, so wird dieser Bestandteil der Harze während des Extrudierens oder nach dem Kalandrieren des Verbundmaterials, bestehend aus einem oder mehreren wärmehärtbaren Harzen und den Fasern durch entsprechende bekannte Techniken entfernt. Durch entsprechend starke Vortrocknung der Fasern und der Harze vor dem Extrudieren kann die Beseitigung von Abfallwasser weitgehend unterbleiben, da dann kaum solches Wasser anfällt.

Der Mischung aus Fasern und/oder Pellets und wärmehärtbaren Harzen werden je nach Bedarf Additive aus der Gruppe Mineralpartikeln, Strahlungsstabilisatoren, Katalysatoren, Farbpigmente zugesetzt.

In einer bevorzugten Verfahrensvariante der Erfindung werden 50 bis 90 Gew.-% Fasern und/oder Pellets mit 10 bis 50 Gew.-% eines oder mehreren wärmehärtbaren Harzen gemischt, wobei die Gewichtsprozente jeweils auf das Gesamtgewicht der Mischung bezogen sind. Die relativen Gewichtsprozente der Fasern und/oder Pellets und des bzw. der Harze sind variabel und hängen von verschiedenen Größen ab wie beispielsweise Typ und Partikelgröße sowie Feuchtigkeit der Fasern und/oder Pellets und der Viskosität des oder der Harze. Durch Veränderung dieser Gewichtsprozente können die gewünschten physikalischen Eigenschaften der Mischung, aus der die Vorprodukte produziert werden, nach Wunsch eingestellt werden.

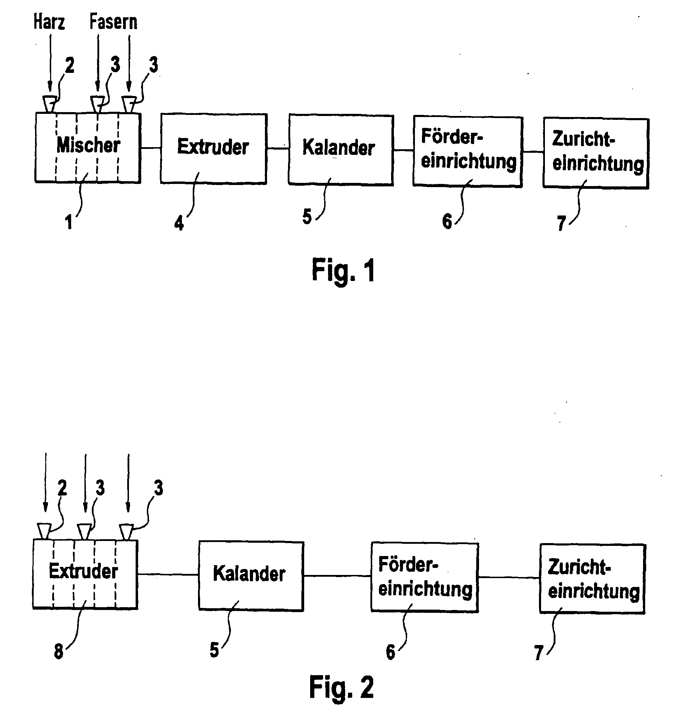

Wie in Fig. 1 schematisch dargestellt ist, werden einem Mischer 1 wärmehärtbares Harz 2 und Fasern und/oder Pellets 3 getrennt zugeführt, wobei zwei Typen von Fasern und/oder Pellets zudosiert werden können. Anstelle eines Harzes kann auch eine Mischung aus zwei oder mehreren wärmehärtbaren Harzen dem Mischer 1 eingespeistwerden. Ebenso können auch mehr als zwei Typen von Fasern und/oder Pellets zudosiert werden, die sich in den Dichten und dem Verhältnis Länge zu Durchmesser voneinander unterscheiden. Werden an Stelle freier Fasern Pellets aus Zellulose bzw. Holz verwendet, so können wesentlich höhere Schüttdichten erreicht werden, die bis zu 100 % höher sein können. Die Verwendung von Pellets anstatt von Fasern vereinfacht die Dosierung. Je nach geforderter Schnittdichte kommen nur Fasern, nur Pellets oder auch Kombinationen aus Fasern und Pellets zum Einsatz.

Der Mischer 1 enthält Kneteinrichtungen und die Fasern und/oder Pellets 3 werden in das wärmehärtbare Harz 2 homogen eingearbeitet. Dabei muß darauf geachtet werden, daß die Temperatur der homogenen Mischung die Temperatur von etwa 120 °C nicht überschreitet, ab der es zum Aushärten des Harzes bzw. der Harze kommt, falls eine Mischung von zwei oder mehreren wärmehärtbaren Harzen eingesetzt wird. Dabei können wärmehärtbare Harze 2 mit unterschiedlichen Kondensationsgraden und unterschiedliche Typen verwendet werden. Die Schüttdichte der Fasern beträgt 50 bis 300 kg/m³ und insbesondere 130 bis 150 und 250 bis 270 kg/m³. Der Mischer 1 besteht beispielsweise aus mehreren Gehäusen und besitzt eine wirksame Länge von 40 D, mit D gleich dem Durchmesser der Schnecke des Mischers. Die Fasern 3 werden in das wärmehärtbare Harz 2 homogen durch die Kneteinrichtungen eingearbeitet. Die Dosierung des Harzes erfolgt volumetrisch mittels einer Kolbenpumpe in das erste Gehäuse des Mischers. Die Dosierung von Fasern mit einer Schüttdichte von beispielsweise 50 kg/m³ erfolgt zusammen mit einem weiteren Fasertyp, der eine Schüttdichte von 250 bis 270 kg/m³ besitzt, insbesondere 256 kg/m³ . Dabei erfolgt hier die Dosierung des Fasertyps mit der kleinen Schüttdichte volumetrisch, während die Dosierung des Fasertyps höherer Schüttdichte gravimetrisch vorgenommen wird. Diese Dosierungen werden beispielsweise im dritten und fünften Gehäusen des Mischers vorgenommen. Ebenso können mehr als zwei unterschiedliche Fasertypen, die sich in den Dichten und dem Verhältnis Faserlänge zu Faserdurchmesser voneinander unterscheiden, zudosiert werden.

Bei einer anderen Verfahrensweise wird nur ein einziger Fasertyp mit der Schüttdichte 250 bis 270 kg/m³, insbesondere 256 kg/m³ in das dritte und fünfte Gehäuse eingebracht. In einem weiteren Fall wurde ein einziger Fasertyp mit einer Schüttdichte von 130 bis 150 kg/m³, insbesondere 140 kg/m³ dem Harz über das dritte und fünfte Gehäuse zudosiert, wobei die Dosierung gravimetrisch erfolgte.

Neben Fasern können auch Pellets aus Zellulose oder Holz eingesetzt werden. Die Pellets werden durch Komprimieren von Fasern aus Holz oder Zellulose hergestellt, wobei keine Bindemittel verwendet werden. Des weiteren können Pellets aus Holzmehl, Fasern des Typs A, B oder aus anderen Fasertypen durch Komprimieren gewonnen werden. Die Schüttdichte der Pellets liegt zwischen 400 bis 500 kg/m³ und ist umso größer je kleiner die Abmessungen der Pellets sind. Es können dabei Kombinationen aus verschiedenen Fasertypen, Fasern und Pellets, oder nur aus Pellettypen eingesetzt werden. Die Auswahl der jeweiligen Kombination richtet sich nach der angestrebten Dichte des herzustellenden Vorprodukts.

In der folgenden Tabelle sind Daten einiger Rezepturen von Vorprodukten zusammengestellt. Die Vorprodukte weisen im allgemeinen einen Feuchtigkeitsgehalt kleiner 10 Gew.-% bis zu etwa 2 bis 5 Gew.-% auf.

| **Vorprodukt Nr.** | **Holzfasertyp** (**Gew.-%**) | **Schüttdichte** (**kg/m³**) | **Harztyp** (**Gew.-%**) | **Durchsatz** (**kg/h**) | **Temperatur** (**°C**) |
|---|---|---|---|---|---|
| 1 | A (70) | 256 | Phenolharz (30) | 100 | 60 |
| 2 | A (70) | 256 | " (") | 100 | 60 |
| 3 | B (70) | 140 | " (") | 100 | 100 |
| 4 | C (42) + A (28) | 50 + 256 | " (") | 100 | 100 |
| 5 | C (42) + A (28) | 50 + 256 | " (") | 100 | 60 |
| 6 | B (70) | 140 | " (") | 100 | 60 |
| 7 | B (70) | 140 | " (") | 100 | 120 |

In dem Mischer ließen sich alle Rezepturen problemlos verarbeiten, Schwierigkeiten ergaben sich nur bei der Dosierung eines bestimmten Holzfasertyps, nämlich des Typs B, der zur Brückenbildung neigt. Die Schwierigkeiten beim Zudosieren können sehr einfach durch den Einsatz von Pellets anstelle von Fasern gelöst werden. Diese ermöglichen es den in der voranstehenden Tabelle angegebenen Durchsatz um bis zu 100 % zu erhöhen. Durch die höhere Reibung im Mischer zerfallen die Pellets zu Fasern, die von dem oder den Harz(en) umschlossen werden. Die Einarbeitung der Holzfasern als solche in das Harz erfolgte weitgehend homogen bei Temperaturen von 60 bis 120 °C.

Die homogene Mischung wird von dem Mischer 1 in einen Extruder 4 eingespeist, der für die Extrusion der Mischung aus Fasern und Harz mit seiner Schneckenkonfiguration entsprechend angepaßt ist. Die Fasern sind von dem Harz umschlossen.

Die Kompressionszone des Extruders kann gekühlt werden, um sicherzustellen, daß die Mischung in keinem Abschnitt des Extruders 4 die Temperatur von 120 °C überschreitet, oberhalb der die Aushärtung des Harzes einsetzt und schnell abgeschlossen ist. Werden kurze Fasern verwendet, dann ist die Reibung in der Kompressionszone des Extruders so gering, daß diese Zone statt gekühlt erwärmt werden muß.

Die aus einem Extruder 4 austretende homogene Mischung aus Fasern und Harz wird einem Kalander 5 zugeführt, dessen Walzenspalt auf 0,4 bis 10 mm einstellbar ist. Die homogene Masse bzw. Mischung wird im Kalander 5 mattenförmig bis auf eine Breite von 100 bis 4000 mm ausgewalzt und von einer Fördereinrichtung 6, beispielsweise einem Transportband, einer Zurichteinrichtung 7 zugeführt. In der Zurichteinrichtung 7 wird das mattenförmige Vorprodukt in gewünschte Formate abgelängt, die dann zu Platten weiterverarbeitet oder zwischengelagert werden.

Nach Fig. 2 kann bei der Herstellung der Vorprodukte auf einen Mischer verzichtet werden, statt dessen werden das Harz 2 und zwei unterschiedliche Typen von Fasern 3 in einen Extruder 8 eindosiert, der ein Doppelschneckenextruder mit Kneteinrichtung ist, die nach den Eingabeöffnungen für Fasern 3 angeordnet sind. Bei den Kneteinrichtungen handelt es sich um nichtreversierende Elemente, die dazu genutzt werden, eine bessere Durchmischung zu erreichen. Umkehrbare Knetelemente können nicht verwendet werden, da diese die Mischung aus Fasern und Harz gegen die Schnecke in einem derartigen Ausmaß andrücken würden, daß diese blockiert wird. Durch Vermeidung eines Rückdrucks im Extruder in der Weise, daß dieser ein offenes Ende besitzt, d.h. nicht mit einer Düse verbunden ist, kann der Temperaturanstieg im Extruder, bewirkt durch Reibung, begrenzt werden. Dadurch wird auch der Einsatz von Knetelementen zum besseren Durchmischen möglich. Die Temperatur des Extruders wird so geregelt und gesteuert, daß diese weder im Extruder noch am Extruderausgang 120 °C übersteigt, da ab einer höheren Temperatur als 120 °C die Durchhärtung des Harzes oder der Harze voll einsetzt. Im Extruder 8 wird das Material so weit erwärmt, daß eine zusätzliche Heizung, bspw. außerhalb des Extruders, in der Regel nicht erforderlich ist.

Die extrudierte Mischung wird ebenso wie bei der Verfahrensweise nach Fig. 1 dem Kalander 5 und von diesem mittels einer Fördereinrichtung 6 einer Zurichteinrichtung 7 zugeleitet.

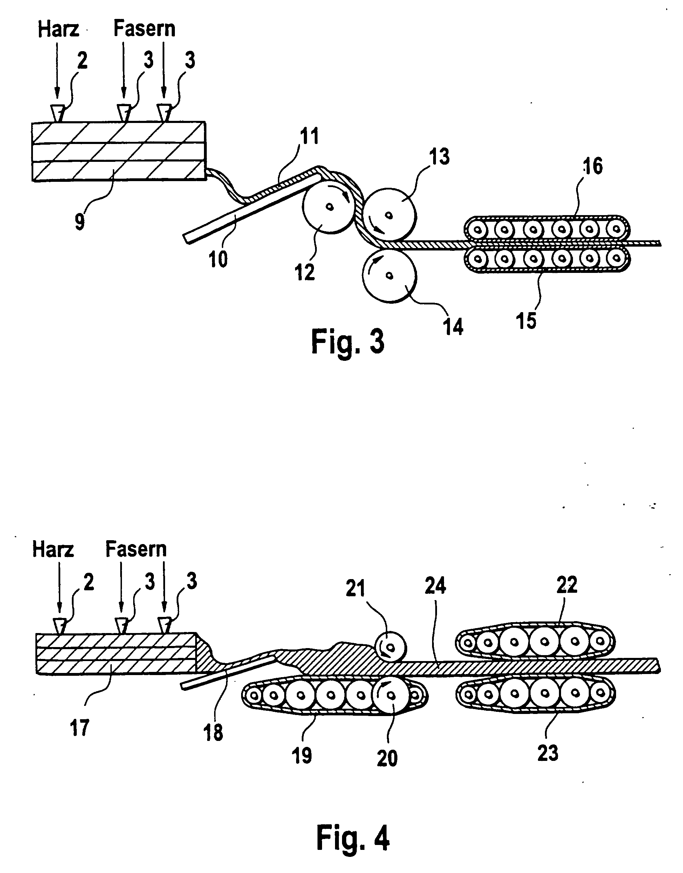

In Fig. 3 sind die Einrichtungen zur Durchführung des Verfahrens nach Fig. 2 schematisch dargestellt. Ein Extruder 9, der dem Extruder 8 der Fig. 2 entspricht, hat bis zu zehn Heizzonen, deren Temperaturen so geregelt sind, daß ein Temperaturbereich von 27/35 °C bzw. 50/60 °C bis 106/115 °C und maximal 120 °C am Extruderausgang abgedeckt ist. Dem Extruder wird zunächst ein Harz 2 bzw. eine Harzmischung aus zwei oder mehreren härtbaren Harzen zugeführt und danach aufeinanderfolgend Fasern 3 von unterschiedlicher Beschaffenheit. Die Feuchtigkeit kann den Harzen und den Fasern im Extruder 9 durch Entgasen mittels Unterdruck entzogen werden. Ebenso kann die Feuchtigkeit nach den Knetelementen des Extruders entzogen werden, indem dort das Extrudergehäuse offen ist, so daß die Feuchtigkeit wegen der herrschenden Temperatur von 100 von 120 °C verdunsten kann. Von dem Extruder 9 wird die Mischung 11 auf eine schräge Beschickungsvorrichtung 10 kontinuierlich extrudiert, die einen Kalander, mit beispielsweise drei Kalanderwalzen 12, 13, 14 beschickt. Der Kalander kann auch vier bis sechs Kalanderwalzen umfassen. Die Beschickungsvorrichtung 10 ist üblicherweise ein Förderband, das einstellbar über die Breite der Mischung 11 im ersten Walzenspalt zwischen den beiden Kalanderwalzen 12 und 13 hin- und herbewegbar ist. Da an den Endpunkten der Hin- und Herbewegung von dem Förderband mehr Mischung abgezogen wird als in der Mitte der Kalanderwalzen 12, 13, verweilt das Förderband an den Endpunkten eine bestimmte Zeit. Die Bandgeschwindigkeit des Förderbandes, die Größe und die Geschwindigkeit der Schwenkbewegung sowie die Verweilzeiten in den Endpunkten sind einstellbar. Anstelle eines schwenkbaren Förderbandes kann auch eine sonstige Fördereinrichtung eingesetzt werden, die die Mischung 11 an die Kalanderwalzen anträgt. Die Beschickungsvorrichtung 10 ermöglicht es insbesondere längere Fasern zu verarbeiten. Für den Fall, daß der Extruder 9 eine Breitschlitzdüse beschickt, was voraussetzt, daß kleinere Fasern verarbeitet werden, können die Beschickungsvorrichtung und eventuell der Kalander weggelassen werden und die Mischung 11 direkt von der Breitschlitzdüse den Bandförderern zugeführt werden. Die Kalanderwalzen üben einen derartigen Druck auf die Mischung 11 aus, daß im Walzenspalt zwischen den Kalanderwalzen 13 und 14 eine stabile Matte geformt wird. Die Breite der Matte beträgt 100 bis 4000 mm. Nach dem Verlassen des Kalanders gelangt das mattenförmige Vorprodukt auf einen Bandförderer 15, 16, der das mattenförmige Vorprodukt stabilisiert. Der Bandförderer besteht beispielsweise aus zwei endlos um Rollen umlaufenden Förderbändern, die wie eine kontinuierliche Presse auf das mattenförmige Vorprodukt einwirken und einen Spalt bilden, durch den das Vorprodukt hindurchläuft.

Der Härtungsvorgang des Harzes bzw. der Harzmischung in dem Vorprodukt wird durch die Kalanderwalzen 13, 14, die auf Temperaturen unterhalb von 120 °C erwärmt oder auf Raumtemperatur oder darunter abgekühlt sind, oder die Förderbänder 15, 16 gestoppt, da diese das Vorprodukt jeweils unter 120 °C abkühlen. Die Dichte des Vorprodukts kann bei höheren Dichten durch die Temperaturregelung der Mischung 11 gesteuert werden. Die Dichte liegt im Bereich von 250 bis 1250 kg/m³, sie kann ferner innerhalb dieses Bereiches durch Verwendung kürzerer Fasern in Richtung größerer Dichte gesteuert werden.

In Fig. 4 sind weitere Einrichtungen zur Durchführung des Verfahrens nach Fig. 2 schematisch dargestellt. Ein Extruder 17 hat bis zu zehn Heizzonen, deren Temperaturen einen Bereich von 27/35 °C bzw. 50/60 °C bis 106/115 °C und maximal 120 °C am Extruderausgang abdecken. Dem Extruder 17 wird zuerst ein Harz 2 bzw. eine Harzmischung aus zwei oder mehreren härtbaren Harzen zugeführt und danach aufeinanderfolgend Fasern 3 oder Pellets oder Fasern und Pellets von unterschiedlicher Beschaffenheit. Die Mischung wird auf eine schräge Beschickungsvorrichtung 18 kontinuierlich extrudiert, die ein Förderband 19 beschickt. Diese Beschickungsvorrichtung 10 der Fig. 3 und ihre Funktionsweise wurde schon anhand der Fig. 3 beschrieben, worauf Bezug genommen wird, um Wiederholungen zu vermeiden. Die Beschickungsvorrichtung 18 streut eine Matte auf das Förderband 19. Zwei Walzen 20, 21 verdichten diese Matte zu einer stabilen Matte 24, deren Breite 100 bis 4000 mm beträgt. Die Walzen 20, 21 sind je nach Bedarf entweder gekühlt, so daß die heiße gestreute Matte gekühlt wird, oder erwärmt, falls die Mischung aus dem Extruder auf eine Temperatur, die für das teilweise Aushärten erforderlich ist, erhöht werden muß. Die stabile Matte 24 durchläuft einen Spalt zweier Förderbänder eines Bandförderers 22, 23, die wie eine kontinuierliche Presse auf die Matte 24 einwirken und diese zu einem fertigen Vorprodukt stabilisieren.

Mit der Erfindung werden die Vorteile erzielt, daß Vorprodukte unterschiedlicher Breite hergestellt werden können, daß Fasern verschiedener Typen bezüglich der Länge und Breite der Fasern eingesetzt werden und verschiedene Harze in Bezug auf den Kondensationsgrad, die Mischung der Harze untereinander und Harztypen verwendet werden können, die üblicherweise bei einer Beharzung in einer Blaslinie nicht geeignet sind. Bei den Mischungen aus Fasern und Harz können zwei oder mehrere Harze mit den Fasern gemischt werden, wobei diese Harze getrennt dem Mischer bzw. dem Extruder zugeführt werden können. Dadurch ist es möglich, eine Harzmischung einzusetzen, die so angepaßt ist, daß die angestrebte Qualität und Beschaffenheit der Oberfläche des Vorprodukts erreicht wird. Der Mischung aus Fasern und wärmehärtbarem Harz bzw. härtbaren Harzen können Additive wie Mineralpartikel, Strahlungsstabilisatoren, Katalysatoren, Farbpigmente zugesetzt werden, die den aus den Vorprodukten hergestellten Platten eine höhere Dimensionsstabilität oder ein bestimmtes gewünschtes Aussehen verleihen, falls für die Plattenherstellung keine Dekorschichten und keine Überzüge verwendet werden. Die Additive werden in einem Umfang von 1 bis 20 Gew.-%, bezogen auf das Gewicht des Vorprodukts, hinzugefügt. Die Vorprodukte werden als Ausgangsmaterial für die Herstellung von heißverpreßten und ausgehärteten Teilen oder Platten verwendet, wobei während der Heißverpressung die komplette Aushärtung der nicht durchgehärteten Vorprodukte erfolgt. Hierbei können die Vorprodukte als Einzelschicht, je nach gewünschter Dicke der Platte, heißverpreßt werden oder es können mehrere Schichten aus Vorprodukten zusammen mit Dekorschichten oder sonstigen Schichten miteinander heißverpreßt werden. Bei der Heißverpressung muß stets sichergestellt werden, daß das Harz bzw. die Harzmischung des Vorprodukts vollständig aushärtet. Das Harz oder die Harze der Vorprodukte besitzen eine Viskosität von mindestens 0,05 Pa·s. Diese kann bis zu 100 Pa·s betragen. Bei der Dichte der Vorprodukte zeigen sich bei unterschiedlichen Fasertypen deutliche Unterschiede. Je höher die Schüttdichte der Fasern ist, desto größer ist die Dichte des Vorprodukts. Dabei zeigt sich u.a. eine gewissen Temperaturunabhängigkeit der Dichte des Vorprodukts bei Verwendung des Holzfasertyps A gemäß der Tabelle mit einer Schüttdichte von etwa 260 kg/m³ von der Temperatur im Bereich von 60 bis 100 °C. Demgegenüber ist die Dichte des Vorprodukts, bei dem der Holzfasertyp B mit einer Schüttdichte von etwa 140 kg/m³ eingesetzt wird, im Temperaturbereich von 60 bis 120 °C temperaturabhängig, wobei mit der steigenden Temperatur die Dichte höher wird und sich bei 60 °C eine Dichte von 450 kg/m³ und bei 120 °C eine Dichte von 550 kg/m³ ergibt. Mit diesem Holzfasertyp können durch Druckerhöhung im Kalander und Temperaturerhöhung Dichten des Vorprodukts von 500 bis 700 kg/m³ im Temperaturbereich von 60 bis 120 °C erreicht werden. Der Holzfasertyp A, der im wesentlichen kubische Gestalt besitzt, ist durch eine Temperaturerhöhung kaum stärker zu verdichten und hat im Temperaturbereich von 60 bis 120 °C auch bei Druckerhöhung eine nahezu konstante Dichte zwischen 590 und 660 kg/m³. Insbesondere mit dem Holzfasertyp B lassen sich Vorprodukte mit sehr glatter Oberfläche herstellen. Bei geringeren Schüttdichten als 140 kg/m³ der Holzfasern ergibt sich eine leicht aufgerauhte Struktur der Oberflächen der Vorprodukte.

## Patentansprüche

1. Verfahren zur kontinuierlichen Herstellung eines mattenförmigen Vorprodukts für Platten aus einer Mischung, die aus Fasern und/oder Pellets aus Zellulose bzw. Holz und zumindest einem wärmehärtbaren Harz besteht, umfassend die Verfahrensschritte
(a) Mischen von 50 bis 90 Gew.-% Fasern und/oder Pellets mit 10 bis 50 Gew.-% wärmehärtbarem Harz, wobei die Gewichtsprozente jeweils auf das Gesamtgewicht der Mischung bezogen sind,
(b) Kneten und Homogenisierung der Mischung aus Fasern und/oder Pellets, wobei die Pellets zu Fasern zerfallen, und zumindest einem wärmehärtbaren Harz und Weiterleiten der Mischung an einen Extruder,
(c) Erwärmen der Mischung im Extruder auf eine Temperatur am Extruderausgang, bei der die Härtung des Harzes einsetzt,
(d) Extrudieren dernicht durchgehärtetenMischung als homogene Masse und Verteilung der homogenen Masse,
(e) Druckausübung auf die homogene Masse in einem solchen Umfang, daß ein mattenförmiges Vorprodukt erhalten wird, und
(f) Abtransport und Stabilisierung der gewünschten Form des Vorprodukts, **dadurch gekennzeichnet, dass** die aus dem Extruder austretende homogene Mischung aus Fasern und Harz einer Kalanderstrecke zugeführt wird, die Druckausübung auf die homogene Masse in der Kalanderstrecke stattfindet und dass der Härtungsvorgang des Hrzes bzw. der Harze durch Kühlen der Kalandrierzone und/oder eines Bandförderers gestoppt wird, wobei der Bandförderer der Kalanderstrecke nachgeschaltet ist.

2. Verfahren zurkontinuierlichen Herstellung eines mattenförmigen Vorprodukts für Platten aus einer Mischung, die aus Fasern und/oder Pellets aus Zellulose bzw. Holz und zumindest einem wärmehärtbaren Harz besteht, umfassend die Verfahrensschritte (a') Mischen und Kneten von 50 bis 90 Gew.-% Fasern und/oder Pellets mit 10 bis 50 Gew.-% wärmehärtbarem Harz in einem Extruder, wobei die Pellets zu Fasern zerfallen, (b') unterschiedlich starkes Erwärmen der Mischung aus Fasern und zumindest einem wärmehärtbaren Harz im Extruder,

3. Verfahren nach Anspruch 1 oder 2, **dadurch gekennzeichnet, daß** die Fasern Holzfasern sind, die eine Feuchtigkeit im Bereich von 2 bis 50 Gew.-%, insbesondere von 10 bis 20 Gew.-% besitzen.

4. Verfahren nach Anspruch 1 oder2, **dadurch gekennzeichnet, daß** die Harze und die Fasern und/oder Pellets vor dem Extrudieren auf eine Feuchtigkeit von 2 bis 5 Gew.-% vorgetrocknet werden.

5. Verfahren nach Anspruch 1, **dadurch gekennzeichnet, daß** die Mischung in einem Mischer geknetet wird und danach einem Extruder zugeleitet wird, von dem die Mischung frei von Rückdruck auf die Extruderschnecke extrudiert wird.

6. Verfahren nach Anspruch 1 oder 2, **dadurch gekennzeichnet, daß** wärmehärtbare Harze mit unterschiedlichen Kondensationsgraden, unterschiedliche Typen oder Mischungen von zwei oder mehreren solcher Harze eingesetzt werden.

7. Verfahren nach Anspruch 1 oder 2, **dadurch gekennzeichnet, daß** Fasern von einem, zweien oder mehreren Typen mit unterschiedlichen Dichten und unterschiedlichen Faserlängen zu Faserdurchmessern-Verhältnissen und/oder Pellets dem Mischer zudosiert werden.

8. Verfahren nach Anspruch 6, **dadurch gekennzeichnet, daß** die Harze getrennt von den Fasern und/oder Pellets dem Mischer zugeführt werden.

9. Verfahren nach Anspruch 1 oder 2, **dadurch gekennzeichnet, daß** die höchste Temperatur der Mischung, die am Extruderausgang auftritt, 120 °C nicht überschreitet.

10. Verfahren nach Anspruch 1, 2 oder 5, **dadurch gekennzeichnet, daß** die wärmehärtbaren Harze aus der Gruppe Phenol-, Melamin-, Epoxidharze ausgewählt sind.

11. Verfahren nach Anspruch 10, **dadurch gekennzeichnet, daß** die wärmehärtbaren Harze eine Viskosität von mindestens 0.05 Pa·s besitzen.

12. Verfahren nach Anspruch 11, **dadurch gekennzeichnet, daß** die Harze eine Viskosität im Bereich von 0.05 bis 100 Pa·s aufweisen.

13. Verfahren nach Anspruch 11 oder 12, **dadurch gekennzeichnet, daß** die Harze wasser- und/oder lösungsmittelfrei sind.

14. Verfahren nach Anspruch 11 oder 12, **dadurch gekennzeichnet, daß** die Harze Wasser oder ein Lösungsmittel enthalten, die während des Extrudierens oder nach dem Kalandrieren entfernt werden.

15. Verfahren nach Anspruch 1 oder 2, **dadurch gekennzeichnet, daß** der Mischung aus Fasern und/oder Pellets und wärmehärtbarem(n) Harz(en) Additive aus der Gruppe Mineralpartikel, Strahlungsstabilisatoren, Katalysatoren, Farbpigmente zugesetzt werden.

16. Verfahren nach Anspruch 15, **dadurch gekennzeichnet, daß** Fasern mit einer Schüttdichte von 50 bis 300 kg/m³ und Pellets mit einer Schüttdichte von 400 bis 500 kg/m³ eingesetzt werden.

17. Verfahren nach Anspruch 1 oder 2, **dadurch gekennzeichnet, daß** zu Beginn des Transports des mattenförmigen Vorprodukts Druck auf das Vorprodukt ausgeübt wird, um die Form und die Handhabung des Vorprodukts zu stabilisieren.

18. Verfahren nach einem der Ansprüche 1 bis 17, **dadurch gekennzeichnet, daß** die auf die Mischung aus Fasern und wärmehärtbarem(n) Harz(en) und das mattenförmige Vorprodukt ausgeübten Temperaturen und aufgebrachten Drücke so gewählt werden, daß die Dichte des fertigen Vorprodukts 250 bis 1250 kg/m³ beträgt.

19. Verfahren nach einem der Ansprüche 1 bis 18, **dadurch gekennzeichnet, daß** die Breite des mattenförmigen Vorprodukts im Bereich von 100 bis 4000 mm liegt.

20. Verfahren nach einem der Ansprüche 1 bis 19, **dadurch gekennzeichnet, daß** das Verhältnis von Länge/Breite der Fasern im Bereich von 2 bis 20 liegt.

21. Verfahren nach einem der Ansprüche 1 bis 19, **dadurch gekennzeichnet, daß** das Verhältnis von Länge/Breite der Fasern im Bereich von 21 bis 40 liegt.

22. Verfahren nach Anspruch 1 oder 2, **dadurch gekennzeichnet, daß** der Extruder Zonen mit unterschiedlichen Temperaturen enthält.

## Claims

1. Method for the continuous fabrication of a mat-like precursor for panels from a mixture which consists of fibres and/or pellets of cellulose or wood and at least one thermally hardenable resin, comprising the steps
(a) mixing in the range of 50% to 90% by weight of fibres and/or pellets with in the range of 10% to 50% by weight of thermally hardenable resin, the percentages by weight relating, in each case, to the total weight of the mixture,
(b) kneading and homogenising the mixture of fibres and/or pellets, wherein the pellets disintegrate to fibres, with at least one thermally hardenable resin and passing the mixture to an extruder,
(c) heating the mixture in the extruder to a temperature at the extruder outlet at which hardening of the resin begins,
(d) extruding the incompletely hardened mixture as a homogeneous mass and distributing the homogeneous mass,
(e) exerting pressure on the homogeneous mass to such an extent that a mat-like precursor is obtained, and
(f) transporting away and stabilising the desired form of the precursor, **characterised in that** the homogenous mixture of fibres and resin emerging from the extruder is fed to a calendering section, the exertion of pressure on the homogeneous mass takes place in the calendering section and that the process of hardenable of the resin or resins is halted by cooling the calendering zone and/or a belt conveyor, wherein the belt conveyor is arranged after the calendering section.

2. Method according to claim 1, **characterised in that** the method steps (a) and (b) are replaced by (a') and (b'), comprising the method steps
(a') mixing and kneading in the range of 50% to 90% by weight of fibres and/or pellets with in the range of 10% to 50% by weight of thermally hardenable resin in an extruder, wherein the pellets disintegrate to fibres,
(b') heating the mixture of fibres and at least one thermally hardenable resin to a different extent in the extruder.

3. Method according to claim 1 or 2, **characterised in that** the fibres are wood fibres which have a moisture content in the range of 2% to 50% by weight, in particular 10% to 20% by weight.

4. Method according to claim 1 or 2, **characterised in that** the resins and the fibres and/or pellets are pre-dried before extrusion to a moisture content in the range of 2% to 5% by weight.

5. Method according to claim 1, **characterised in that** the mixture is kneaded in a mixer and then passed to an extruder from which the mixture is extruded free from backpressure on the extruder screw.

6. Method according to claim 1 or 2, **characterised in that** thermally hardenable resins with different degrees of condensation, different types or mixtures of two or more such resins are used.

7. Method according to claim 1 or 2, **characterised in that** fibres of one, two or more types with different densities and different ratios of fibre length to fibre diameter and/or pellets are dosed in to the mixer.

8. Method according to claim 6, **characterised in that** the resins are fed to the mixer separately from the fibres and/or pellets.

9. Method according to claim 1 or 2, **characterised in that** the highest temperature of the mixture that emerges from the extruder outlet does not exceed 120°C.

10. Method according to claim 1, 2 or 5, **characterised in that** the thermally hardenable resins are selected from the group of phenolic, melamine or epoxy resins.

11. Method according to claim 10, **characterised in that** the thermally hardenable resins have a viscosity of at least 0.05 Pa.s.

12. Method according to claim 11, **characterised in that** the resins have a viscosity in the range of 0.05 Pa.s to 100 Pa.s.

13. Method according to claim 11 or 12, **characterised in that** the resins are water-free and/or solvent-free.

14. Method according to claim 11 or 12, **characterised in that** the resins contain water or a solvent which is removed during the extrusion or following calendering.

15. Method according to claim 1 or 2, **characterised in that** additives from the group of mineral particles, radiation stabilisers, catalysts and colour pigments are added to the mixture of fibres and/or pellets and thermally hardenable resin(s).

16. Method according to claim 15, **characterised in that** fibres with a bulk density in the range of 50 kg/m³ to 300 kg/m³ and pellets with a bulk density in the range of 400 kg/m³ to 500 kg/m³ are used.

17. Method according to claim 1 or 2, **characterised in that**, at the start of the transport of the mat-like precursor, pressure is exerted on the precursor in order to stabilise the shape and handling properties of the precursor.

18. Method according to one of the claims 1 to 17, **characterised in that** the temperatures and pressures applied to the mixture of fibres and thermally hardenable resin(s) and the mat-like precursor are selected such that the density of the finished precursor is in the range of 250 kg/m³ to 1250 kg/m³.

19. Method according to one of the claims 1 to 18, **characterised in that** the width of the mat-like precursor is in the range of 100 mm to 4000 mm.

20. Method according to one of the claims 1 to 19, **characterised in that** the ratio of length to width of the fibres is in the range of 2 to 20.

21. Method according to one of the claims 1 to 19, **characterised in that** the ratio of length to width of the fibres is in the range of 21 to 40.

22. Method according to claim 1 or 2, **characterised in that** the extruder has zones at different temperatures.

## Revendications

1. Procédé servant à fabriquer en continu un précurseur en forme de natte pour des panneaux à partir d'un mélange, qui est constitué de fibres et/ou de granulés de cellulose ou de bois et d'au moins une résine thermodurcissable, comprenant les étapes de procédé suivantes consistant à :
(a) mélanger entre 50 et 90 % en poids de fibres et/ou de granulés à 10 à 50 % en poids de résine thermodurcissable, sachant que les pourcentages en poids se rapportent respectivement au poids total du mélange ;
(b) pétrir et homogénéiser le mélange constitué de fibres et/ou de granulés, sachant que les granulés se décomposent en fibres, et d'au moins une résine thermodurcissable, et conduire ledit mélange à une extrudeuse ;
(c) réchauffer le mélange dans l'extrudeuse, à la sortie de ce dernier, à une température, à laquelle commence le durcissement de la résine ;
(d) extruder le mélange, qui n'est pas trempé à coeur, sous la forme d'une masse homogène et répartir la masse homogène ;
(e) exercer une pression sur la masse homogène d'une telle ampleur qu'on obtient un précurseur se présentant sous la forme d'une natte ; et
(f) évacuer et stabiliser la forme souhaitée du précurseur, **caractérisé en ce que** le mélange homogène sortant de l'extrudeuse et constitué de fibres et de résine est amené à une section de calandre, **en ce que** la pression est exercée sur la masse homogène sur ladite section de calandre, et **en ce que** l'opération de durcissement de la résine ou des résines est stoppée par le refroidissement de la zone de calandrage et/ou d'un transporteur à bande, sachant que le transporteur à bande est installé en aval de la section de calandre.

2. Procédé selon la revendication 1, **caractérisé en ce que** les étapes de procédé (a) et (b) sont remplacées par les étapes (a') et (b'), comprenant les étapes de procédé suivantes consistant à :
(a') mélanger et pétrir de 50 à 90 % en poids de fibres et/ou de granulés à 10 à 50 % en poids de résine thermodurcissable dans une extrudeuse, sachant que les granulés se décomposent en fibres ;
(b') réchauffer à des intensités diverses le mélange constitué de fibres et au moins d'une résine thermodurcissable dans l'extrudeuse.

3. Procédé selon la revendication 1 ou 2, **caractérisé en ce que** les fibres sont des fibres de bois, lesquelles présentent une humidité comprise dans la plage allant de 2 à 50 % en poids, en particulier allant de 10 à 20 % en poids.

4. Procédé selon la revendication 1 ou 2, **caractérisé en ce que** les résines et les fibres et/ou les granulés sont préalablement séchés avant l'extrusion à une humidité allant de 2 à 5 % en poids.

5. Procédé selon la revendication 1, **caractérisé en ce que** le mélange est pétri dans un mélangeur avant d'être amené à une extrudeuse, laquelle soumet le mélange à une extrusion sans pression de retour sur la vis de l'extrudeuse.

6. Procédé selon la revendication 1 ou 2, **caractérisé en ce qu'**on utilise des résines thermodurcissables présentant divers degrés de condensation, divers types de résines ou des mélanges de deux résines de ce type ou plus.

7. Procédé selon la revendication 1 ou 2, **caractérisé en ce qu'**on ajoute de manière dosée au mélangeur des granulés et/ou des fibres d'un type, de deux types différents ou plus présentant des densités et des longueurs de fibre différentes selon des rapports donnés de diamètres de fibre.

8. Procédé selon la revendication 6, **caractérisé en ce que** les résines sont amenées au mélangeur séparément des fibres et/ou granulés.

9. Procédé selon la revendication 1 ou 2, **caractérisé en ce que** la température maximale du mélange apparaissant à la sortie de l'extrudeuse ne dépasse pas 120°C.

10. Procédé selon la revendication 1, 2 ou 5, **caractérisé en ce que** les résines thermodurcissables sont choisies parmi le groupe des résines phénoliques, des résines mélamine ou des résines époxy.

11. Procédé selon la revendication 10, **caractérisé en ce que** les résines thermodurcissables présentent une viscosité d'au moins 0,05 Pa.s.

12. Procédé selon la revendication 11, **caractérisé en ce que** les résines présentent une viscosité comprise dans la plage allant de 0,05 à 100 Pa.s.

13. Procédé selon la revendication 11 ou 12, **caractérisé en ce que** les résines sont exemptes d'eau et/ou de dissolvant.

14. Procédé selon la revendication 11 ou 12, **caractérisé en ce que** les résines contiennent de l'eau ou un dissolvant, qui sont supprimés lors de l'extrusion ou après le calandrage.

15. Procédé selon la revendication 1 ou 2, **caractérisé en ce que** sont ajoutés au mélange constitué de fibres et/ou de granulés et d'une/de résine(s) thermodurcissable(s), des additifs issus du groupe des particules minérales, des stabilisateurs de rayonnement, des catalyseurs, des pigments colorants.

16. Procédé selon la revendication 15, **caractérisé en ce qu'**on utilise des fibres présentant une densité apparente allant de 50 à 300 kg/m³ et des granulés présentant une densité apparente allant de 400 à 500 kg/m³.

17. Procédé selon la revendication 1 ou 2, **caractérisé en ce qu'**est exercée au début du transport du précurseur présentant une forme de natte, une pression sur le précurseur afin de stabiliser la forme et la maniabilité du précurseur.

18. Procédé selon l'une quelconque des revendications 1 à 17, **caractérisé en ce que** les températures et les pressions, auxquelles sont exposés le mélange constitué de fibres et d'une/de résine(s) thermodurcissable(s) et le précurseur présentant une forme de natte, sont choisies de telle manière que la densité du précurseur fini est comprise entre 250 et 1250 kg/m³.

19. Procédé selon l'une quelconque des revendications 1 à 18, **caractérisé en ce que** la largeur du précurseur présentant une forme de natte est comprise dans la plage allant de 100 à 4000 mm.

20. Procédé selon l'une quelconque des revendications 1 à 19, **caractérisé en ce que** le rapport longueur/largeur des fibres est compris dans la plage allant de 2 à 20.

21. Procédé selon l'une quelconque des revendications 1 à 19, **caractérisé en ce que** le rapport longueur/largeur des fibres est compris dans la plage allant de 21 à 40.

22. Procédé selon la revendication 1 ou 2, **caractérisé en ce que** l'extrudeuse comporte des zones présentant diverses températures.
